# EUROPEAN PATENT APPLICATION

(11) **EP 4 657 226 A1**
(43) Date of publication of application: **03.12.2025**
(21) Application number: 23927653.8
(22) Date of filing: 10.03.2023
(51) Int. Cl.: G06F 3/04845, G06F 3/0485, G06F 3/04842

(54) **METHOD AND ELECTRONIC DEVICE FOR PROVIDING SCREENSHOT**

(71) Applicant: Samsung Electronics Co., Ltd., Suwon-si, Gyeonggi-do 16677 (KR)
(72) Inventor: TRUONG DINH, Khanh, Suwon-si, Gyeonggi-do 16677 (KR); NGUYEN THI PHUONG, Duyen, Suwon-si, Gyeonggi-do 16677 (KR)
(74) Representative: Gulde & Partner
(86) International application number: PCT/KR2023/003322
(87) International publication number: WO 2024/190931

(57) **Abstract**

The present disclosure provides a method and electronic device for providing a screenshot. The method includes obtaining an initial screen including a plurality of scrollable views, the plurality of views including a first view and a second view, and obtaining information for performing a screenshot with respect to the first view and the second view including a scroll distance of the first view and a scroll distance of the second view. The method includes determining a minimum value between the scroll distances of the first and second views as a scroll cycle, and obtaining the current screen moved by the scroll cycle with respect to the first view and the second view based on an input scroll signal. The method includes obtaining images corresponding to the first view and the second view included in the current screen, and synthesizing the images of the first view and the second view included in the current screen with the initial screen to obtain a screenshot.

## Description

### Technical Field

One or more embodiments relate to a method and electronic device for providing a screenshot with respect to a screen including a plurality of views that are scrollable.

### Background Art

With the development of electronic devices, various methods of providing a user with a screenshot are provided. Because there is a limitation in displaying a screen on a display, a method of providing a screenshot through scrolling is necessary.

In the case where a plurality of views that are scrollable are included in one screen, when a screenshot is performed by scrolling with respect to one view, a screenshot including redundant content with respect to the other views is generated. Also, because scroll lengths of respective views are different, there may be an issue with the method of performing the screenshot. Hereinafter, in the present disclosure, a method of providing a screenshot of a screen including a plurality of scrollable views is disclosed.

### Disclosure of Invention

### Solution to Problem

According to an embodiment of the present disclosure, a method, performed by an electronic device, of providing a screenshot may be provided. The above method may obtain an initial screen including a plurality of views that are scrollable, the plurality of views including a first view and a second view, and obtain information for performing a screenshot with respect to the first view and the second view including a scroll distance of the first view and a scroll distance of the second view. The scroll distance of the first view may be a minimum value between a scroll distance of a part of the first view, which is included in the initial screen, and a scroll distance of a part of the first view, excluded from the initial screen, and the scroll distance of the second view is a minimum value between a scroll distance of a part of the second view, which is included in the initial screen, and a scroll distance of a part of the second view, excluded from the initial screen. The method may determine a minimum value between the scroll distance of the first view and the scroll distance of the second view as a scroll cycle, and may obtain a current screen that is moved by the scroll distance with respect to the first view and the second view, based on an input scroll signal. The method may obtain images corresponding to the first view and the second view included in the current screen, and may obtain a screenshot by synthesizing the images of the first view and the second view included in the obtained current screen with the initial screen

According to an embodiment of the present disclosure, an electronic device for providing a screenshot may be provided. The electronic device providing a screenshot may include a communication unit, a memory storing one or more instructions, and at least one processor configured to execute the one or more instructions. The at least one processor may obtain an initial screen including a plurality of views that are scrollable, the plurality of views including a first view and a second view, and obtain information for performing a screenshot with respect to the first view and the second view including a scroll distance of the first view and a scroll distance of the second view. The scroll distance of the first view may be a minimum value between a scroll distance of a part of the first view, which is included in the initial screen, and a scroll distance of a part of the first view, excluded from the initial screen, and the scroll distance of the second view is a minimum value between a scroll distance of a part of the second view, which is included in the initial screen, and a scroll distance of a part of the second view, excluded from the initial screen. The at least one processor may determine a minimum value between the scroll distance of the first view and the scroll distance of the second view as a scroll cycle, and obtain a current screen that is moved by the scroll distance with respect to the first view and the second view, based on an input scroll signal. The at least one processor may obtain images corresponding to the first view and the second view included in the current screen, and obtain a screenshot by synthesizing the images of the first view and the second view included in the obtained current screen with the initial screen.

According to an embodiment of the present disclosure, provided is a non-transitory computer-readable recording medium having recorded thereon a program, which when executed by a computer, performs the above method disclosed in the present disclosure.

### Brief Description of Drawings

FIG. 1 is a diagram illustrating a method of performing a screenshot by using scrolling, according to an embodiment of the present disclosure.
FIG. 2 is a flowchart illustrating a method of providing a screenshot, by an electronic device, according to an embodiment of the present disclosure, by using scrolling.
FIG. 3 is a schematic block diagram of an electronic device according to an embodiment of the present disclosure.
FIG. 4 is a flowchart schematically illustrating a method of providing a screenshot, by an electronic device, according to an embodiment of the present disclosure, by using scrolling.
FIG. 5 is a flowchart specifically illustrating a method of providing a screenshot, by an electronic device, according to an embodiment of the present disclosure, by using scrolling.
FIG. 6 is a diagram illustrating a method of determining a distance and a line for providing a screenshot, by an electronic device, according to an embodiment of the present disclosure.
FIG. 7 is a flowchart illustrating a method of repeatedly performing scrolling, by an electronic device, according to an embodiment of the present disclosure.
FIG. 8 is a diagram illustrating an example in which an electronic device according to an embodiment of the present disclosure obtains a screenshot by using scrolling.
FIG. 9 is a diagram illustrating a method of determining a scroll cycle, according to an embodiment of the present disclosure.
FIG. 10A is a diagram illustrating a method of providing a screenshot, when there are views scrollable in various directions, according to an embodiment of the present disclosure.
FIG. 10B is a flowchart illustrating a method of providing a screenshot, when there are views scrollable in various directions, according to an embodiment of the present disclosure.
FIG. 11 is a diagram illustrating a method of customizing settings for providing a screenshot, according to an embodiment of the present disclosure.
FIG. 12 is a flowchart illustrating a method of automatically providing a screenshot according to an embodiment of the present disclosure.
FIG. 13 is a diagram illustrating a method of providing a screenshot through customization for each scroll cycle, according to an embodiment of the present disclosure.

### Mode for the Invention

Hereinafter, embodiments of the present disclosure will be described with reference to the drawing.

As the disclosure allows for various changes and numerous embodiments, particular embodiments will be illustrated in the drawings and described in detail in the written description. However, this is not intended to limit the disclosure to particular modes of practice, and it is to be appreciated that all modifications, equivalents, and alternatives that do not depart from the spirit and technical scope are encompassed in the disclosure.

In the description, certain detailed explanations of the related art are omitted when it is deemed that they may unnecessarily obscure the essence of the embodiments of the disclosure. In addition, the number (e.g., first, second, etc.) used in the description herein is only an identifier for distinguishing one component from another.

All terms including descriptive or technical terms which are used herein should be construed as having meanings that are obvious to one of ordinary skill in the art. However, the terms may have different meanings according to an intention of one of ordinary skill in the art, precedent cases, or the appearance of new technologies. Also, some terms may be arbitrarily selected by the applicant. In this case, the meaning of the selected terms will be described in the detailed description. Thus, the terms used herein have to be defined based on the meaning of the terms together with the description throughout the specification.

The scope of the present disclosure may be represented by claims below, rather than the detailed description. Various features recited in a claim category, e.g., a method claim, of the disclosure may also be claimed in another claim category, e.g., a system claim. Embodiments of the disclosure may include not only a combination of features specified in the appended claims but also various combinations of individual features in the claims. It will be understood by those of ordinary skill in the art that various changes in form and details may be made without departing from the spirit and scope of the disclosure as defined by the appended claims and their equivalents.

In the present disclosure, regarding an element represented as a "unit" or a "module", two or more elements may be combined into one element or one element may be divided into two or more elements according to subdivided functions. The function may be implemented in hardware, software, or a combination thereof. In addition, each element described hereinafter may additionally perform some or all of the functions performed by another element, in addition to main functions of itself, and some of the main functions of each element may be performed entirely by another component.

As used herein, the singular forms are intended to include the plural forms as well, unless the context clearly indicates otherwise. Unless defined otherwise, all terms used herein, including technical terms and scientific terms, have the same meaning as commonly understood by one of ordinary skill in the art of the present disclosure.

Throughout the present disclosure, the expression "or" is inclusive rather than exclusive, unless specifically mentioned otherwise. Hence, unless the context clearly indicates otherwise, "A or B" may refer to "A", "B" or both. Throughout the disclosure, the expression "at least one of" or "one or more" may indicate different combinations of one or more of items enumerated or may refer to an occasion when an arbitrary one of the items enumerated is required. For example, "at least one of A, B, and C" may include any of the following combinations: A, B, C, A and B, A and C, B and C, or A, B and C.

It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Also, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

Hereinafter, one or more embodiments of the disclosure will be described in detail with reference to accompanying drawings to the extent that one of ordinary skill in the art would be able to carry out the disclosure. However, the disclosure may be implemented in various manners, and is not limited to one or more embodiments of the disclosure described herein. In addition, components irrelevant with the description are omitted in the drawings for clear description, and like reference numerals are used for similar components throughout the entire specification.

The terminology used herein will be described briefly, and an embodiment of the disclosure will be described in detail.

Terms to be described hereunder have been defined by taking into consideration functions in the present disclosure, and may be different depending on a user, an operator's intention or practice. Accordingly, each term should be defined based on contents over the entire specification.

In the present disclosure, 'scroll distance' may denote, in a scrollable view, a minimum value between a scroll distance of a part included in an initial screen and a scroll distance of a part excluded from the initial screen.

In the present disclosure, 'scroll cycle' may denote a scroll distance for performing scrolling with respect to a plurality of views.

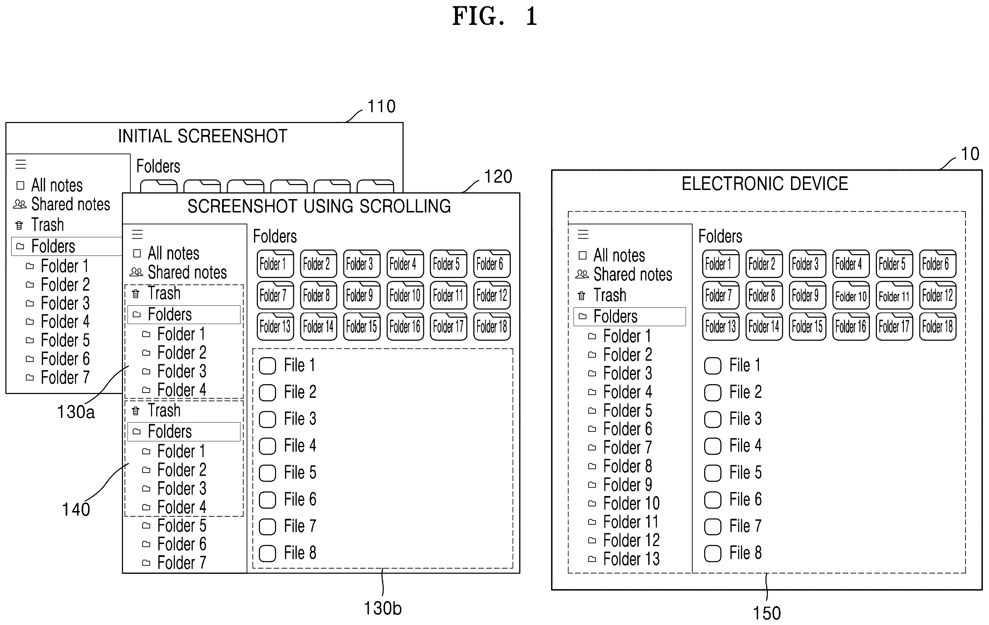

FIG. 1 is a diagram illustrating a method of performing a screenshot using scrolling, according to an embodiment of the present disclosure.

Referring to FIG. 1, when screenshotting with respect to a screen including a plurality of scrollable views, differences between a method according to the related art and the present disclosure may be described below.

In the related art, when a screen including a plurality of scrollable views 130a and 130b is screenshotted, an electronic device 10 obtains an initial screenshot 110 and then may perform a screenshot 120 through scrolling. When the screenshot is performed through scrolling with respect to the screen including a plurality of scrollable views, the scrolling may be performed with respect to one of the plurality of views. For example, a view having the largest size from among the plurality of scrollable views may be scrolled. When scrolling is performed for only one of the plurality of scrollable views 130a and 130b, content may be repeatedly shown in the obtained screenshot. For example, when the screenshot is obtained (120) by performing scrolling only with respect to one view 130b from among the plurality of scrollable views 130a and 130b, repeated content 140 may be included because another view 130b is not scrolled. The screenshot may include unnecessary and redundant content or undesired part may be captured.

According to an embodiment of the present disclosure, the electronic device 10 may screenshot the plurality of scrollable views. The electronic device may obtain an initial screen including the plurality of scrollable views. Hereinafter, for convenience of description, the plurality of scrollable views are referred to as a first view, a second view, etc.

In an embodiment, the electronic device may obtain information for taking screenshots of the first view and the second view. The information for capturing the screenshot may include whether the scrolling is possible, scroll distance, information about positions of lower end lines in respective views according to the scrolling, or scroll cycle, but is not limited thereto.

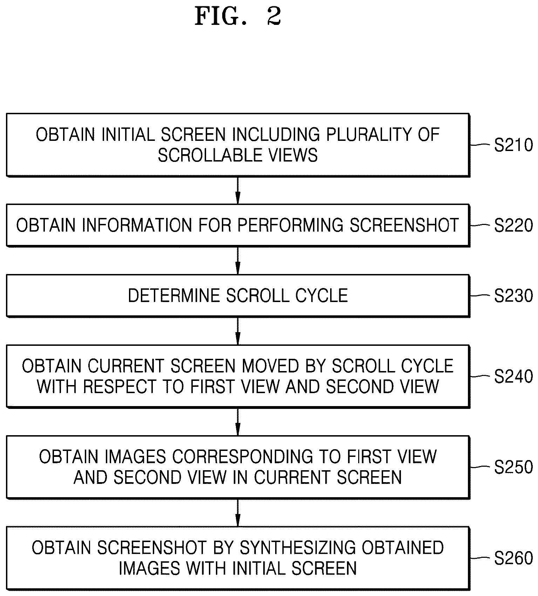

In an embodiment, the electronic device may obtain a current screen of the first and second views moved by the scroll cycle, based on the information for performing the screenshot. The electronic device may obtain images corresponding to the first view and the second view included in the current screen and may obtain screenshots by synthesizing the images with the initial screen. For example, the electronic device may obtain information for taking screenshot with respect to the plurality of scrollable views 130a and 130b. The electronic device may identify the scroll cycle based on the obtained information and may obtain the current screen moved by the scroll cycle with respect to the plurality of views 130a and 130b included in the initial screen. The electronic device may obtain a screenshot 150 by synthesizing the images corresponding to the plurality of views 130a and 130b included in the current screen with the initial screen. Hereinafter, a detailed method of determining the scroll cycle is described below with reference to FIG. 2, etc.

In an embodiment, the electronic device may perform scrolling on the current screen based on an input signal from a user. When the electronic device identifies a condition for continuously performing the scrolling based on the input signal, the electronic device updates the initial screen to the current screen and updates the information for capturing the screenshot. The electronic device may repeatedly perform the above operations with respect to the initial screen that is updated to the current screen. In an embodiment, the electronic device may repeatedly perform the above operations until the scrolling may not be performed with respect to all of the plurality of views or until an input signal for stopping the operation is received from the user.

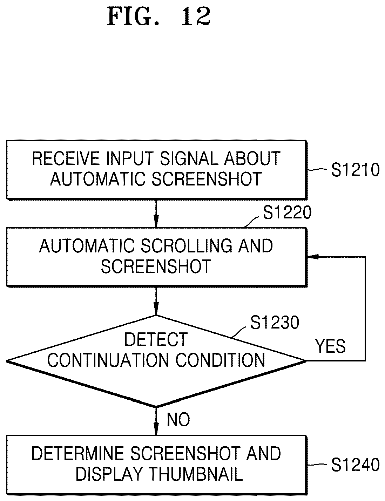

In an embodiment, the electronic device may determine, based on the input signal from the user, a size of the initial screen or select a view on which the capturing or screenshot is to be performed. The electronic device may set a maximum value or a minimum value of the initial screen. Also, the electronic device may set the maximum value or minimum value of the scroll cycle. In an embodiment, the electronic device may automatically perform the scrolling and screenshot, based on the user input signal. Hereinafter, a method of automatically performing the screenshot is described below with reference to FIG. 12.

In an embodiment, the initial screen may include at least one third view. In an embodiment, a scrolling direction of the third view may be different from that of the first view and the second view. The electronic device may split the screen so as to include the views having the same scrolling directions, from among the plurality of views, and may obtain the screenshot by scrolling each split screen. The electronic device may obtain one screenshot by merging the screenshots obtained respectively from the split screens.

FIG. 2 is a flowchart illustrating a method of providing a screenshot, by an electronic device according to an embodiment of the present disclosure, by using scrolling.

In operation S210, the electronic device 10 may obtain an initial screen including a plurality of views that are scrollable. The plurality of views may include a first view and a second view that are scrollable. The plurality of views may further include at least one third view that is scrollable. In an embodiment, a scrolling direction of the third view may be different from that of the first view and the second view.

In an embodiment, the electronic device 10 may obtain the initial screen including a plurality of scrollable views with various sizes. The electronic device 10 may identify whether the screenshot is possible with respect to the plurality of scrollable views based on the user input, in order to obtain the initial screen. The plurality of scrollable views may include a view that does not allow to be screenshotted due to security issues or copyright issues.

In an embodiment, the electronic device 10 may identify whether the screenshot or capture may be performed with respect to the corresponding view, based on an input signal for capturing the plurality of views. When it is identified that the screenshot or capturing is possible, the electronic device 10 may obtain the initial screen including the plurality of scrollable views and perform operation S220. In an embodiment, when the screenshot or capturing of the plurality of views is not allowed, the electronic device 10 may not perform next operation.

In an embodiment, the electronic device 10 may set a size of the initial screen. The electronic device 10 may determine the size of the initial screen based on the input signal from the user. In an embodiment, the electronic device 10 may determine, from among the plurality of views included in the initial screen, the view to be captured for every scroll cycle based on the input signal. For example, the electronic device 10 may include the first view in the capturing target and exclude the second view from the capturing target, from among the plurality of scrollable views based on the input signal.

In operation S220, the electronic device 10 may obtain information for performing screenshots. The electronic device 10 may obtain information about the first view and the second view in order to perform the screenshots with respect to the first view and the second view.

In an embodiment, in order for the electronic device 10 to perform the screenshots with respect to the first view and the second view, the electronic device 10 may obtain information for performing screenshot, including scroll distance, whether the scrolling is possible, information about positions of the lower end lines of the plurality of views according to the scrolling, or scroll cycle. The information for performing the screenshot may include information about each view and information about the scrolling, but is not limited thereto.

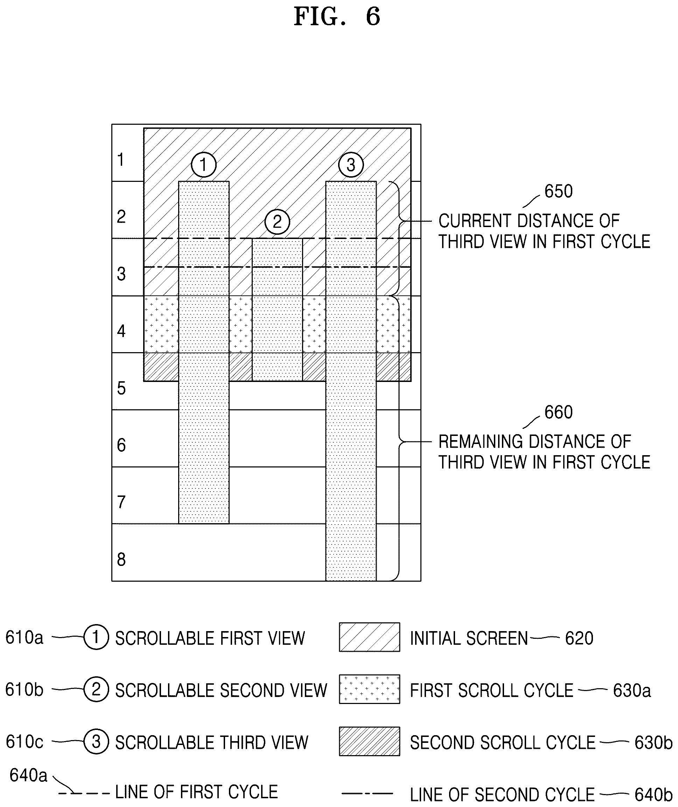

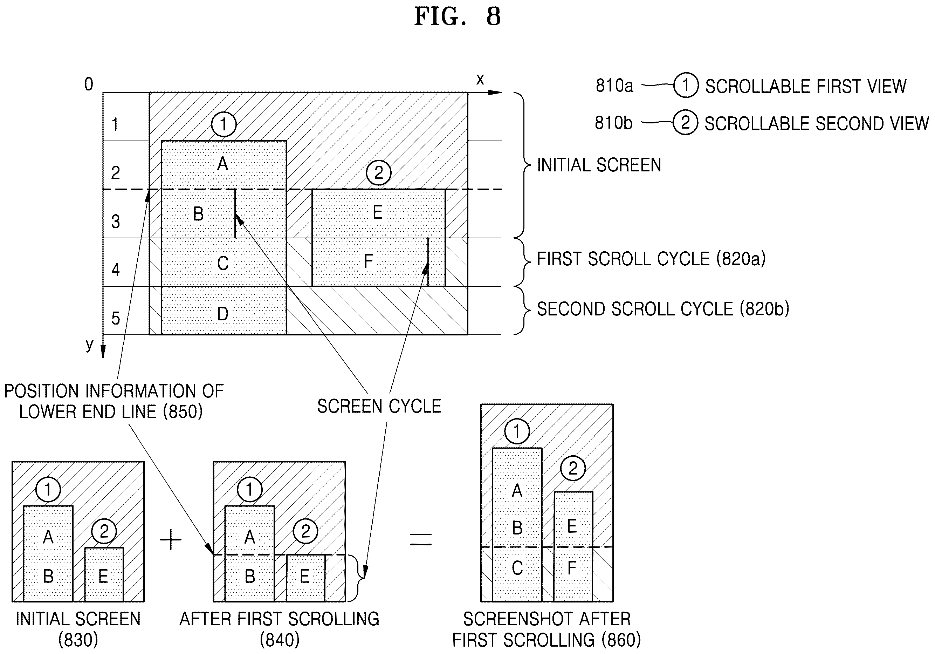

The scroll distance may denote a minimum value between the scroll distance of a part included in the initial screen and a scroll distance of the other part excluded from the initial screen, with respect to each of the views. For example, with respect to the first view, when the part included in the initial screen is smaller than the other part than the initial screen, the scroll distance of the first view may denote the scroll distance included in the initial screen. Hereinafter, a detailed method of determining the scroll distance may be described with reference to FIGS. 6 and 8.

Whether the scrolling is possible may denote information about whether the scrolling is possible with respect to each of the views. For example, when the scrolling is performed once with respect to the first view and the second view, an image of the entire first view is obtained through the initial screen and the current screen and, with respect to the second view, there may be a part that is not included in the initial screen and the current screen obtained after performing the scrolling. When a second scrolling is performed in order to obtain the screenshot of the second view, the scrolling may not be performed with respect to the first view and may be only performed with respect to the second view. Therefore, the information for performing the screenshot may include information indicating that the scrolling is not possible with respect to the first view (e.g., indicator '0') and information indicating that the scrolling is possible with respect to the second view (e.g., indicator '1').

The information about the positions of the lower end lines in the plurality of views according to the scrolling may denote the position where the lower end line of the initial screen is moved according to the scrolling. For example, when the scrolling is performed with respect to the first view and the second view, the position of the lower end line may denote the position where the initial screen including the first view and the second view is moved according to the scroll cycle. Hereinafter, information about the lower end line is described in detail with reference to FIGS. 6 and 8.

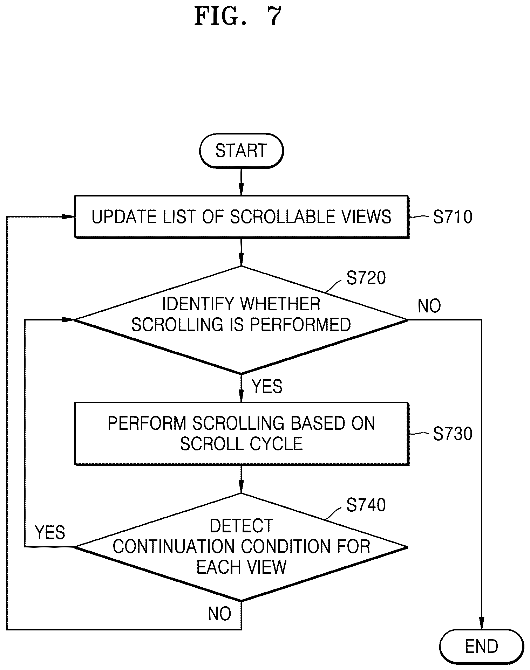

In an embodiment, the information for performing the screenshot may be updated as the scrolling is performed. The electronic device 10 may obtain the current screen by performing the scrolling with respect to the initial screen including the plurality of views. The electronic device 10 may update the information about the scroll distance, position information of the lower end line, whether the scrolling is possible, or the scroll cycle, etc. with respect to each of the views, because the scrolling is repeatedly performed with respect to the plurality of views included in the current screen. This will be described later with reference to FIG. 7.

In operation S230, the electronic device 10 may determine the scroll cycle. The electronic device 10 may determine the scroll cycle based on the information for performing the screenshots obtained in operation S220.

The scroll cycle may denote the scroll distance for performing the scrolling with respect to the plurality of views. The electronic device 10 may determine the scroll distance based on the scroll distances of the plurality of views, so that the same content may not redundantly appear in the screenshot. In an embodiment, the electronic device 10 may determine a minimum value between the scroll distance of the first view and the scroll distance of the second view, as the scroll cycle. For example, when the scroll distance of the first view is less than the scroll distance of the second view, the electronic device 10 may determine the scroll distance of the first view as the scroll cycle. In an embodiment, when there is one view that is scrollable from among the plurality of views, the scroll cycle may denote the scroll distance of the scrollable view. For example, when the scrolling is finished to the lowermost end of the first view and the scrolling is performed only with respect to the second view, the scroll cycle may denote the scroll distance of the second view.

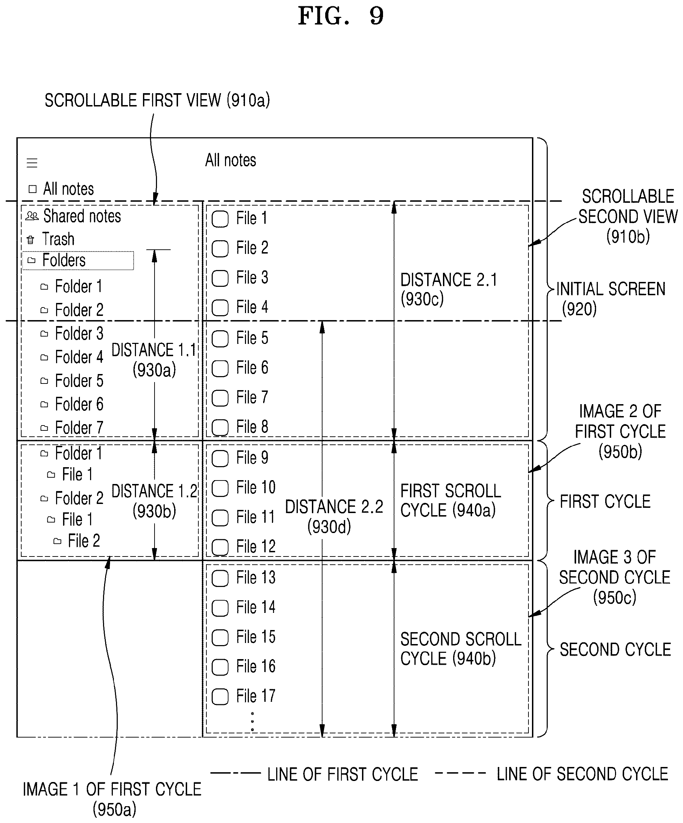

In an embodiment, the electronic device 10 may update the scroll cycle based on the scroll distances of the plurality of views that are updated as the scrolling is performed with respect to the plurality of views. Hereinafter, a detailed method is described below with reference to FIGS. 6 and 9.

In operation S240, the electronic device 10 may obtain the current screen that is moved by the scroll cycle with respect to the first view and the second view. The electronic device 10 may move by the scroll cycle with respect to the first view and the second view, based on the input scroll signal.

In an embodiment, the electronic device 10 may receive an input signal for performing the scrolling with respect to the initial screen including a plurality of views. Based on the input signal from the user, the electronic device 10 may obtain the current screen that is moved by the scroll cycle with respect to each of the plurality of views included in the initial screen.

In an embodiment, when a view that is not scrollable is included in the plurality of views, the electronic device 10 may perform the scrolling except for the corresponding view. For example, when the scrolling is finished to the lowermost end with respect to the first view, the electronic device 10 may obtain the current screen that is moved by the scroll cycle only with respect to the views rather than the first view.

In operation S250, the electronic device 10 may obtain images corresponding to the first view and the second view, from the current screen. The electronic device 10 may obtain an image that is not included in the initial screen, from the current screen that is moved by the scroll cycle with respect to the first view and the second view.

In an embodiment, the electronic device 10 may obtain images for synthesizing a screenshot, with respect to the plurality of views that are scrolled for capturing the screenshot. The electronic device 10 may obtain images to be synthesized with the screenshot, based on the information about the positions of the lower end lines of the plurality of views included in the initial screen according to the movement by the scroll cycle. In an embodiment, the electronic device 10 may identify images of the plurality of views that are not included in the initial screen, based on the positions of the plurality of lower end lines, and may obtain corresponding images.

For example, the electronic device 10 may identify bitmaps of the plurality of views that are not included in the initial screen from the current screen by using the position information of the lower end line of the initial screen, according to the scrolling. A bitmap may include position information of each pixel in a rectangular arrangement of pixels. The electronic device 10 may obtain images respectively for the plurality of views, which are to be synthesized with the initial screen, based on the identified bitmaps. Hereinafter, a detailed method is described below with reference to FIG. 8.

In operation S260, the electronic device 10 may obtain the screenshot by synthesizing the obtained images with the initial screen. The electronic device 10 may obtain the screenshot by synthesizing the images of the first view and the second view included in the current screen obtained in operation S250, with the initial screen.

In an embodiment, the electronic device 10 may synthesize the images obtained based on the bitmaps with the initial screen. The electronic device 10 may synthesize the images with the initial screen by using the bitmaps that are obtained based on the position information of the lower end line of the initial screen. For example, when the images corresponding to the first view and the second view are obtained, the electronic device 10 may identify positions of the first view and the second view in the initial screen based on the bitmaps and may synthesize the corresponding images.

In an embodiment, the electronic device 10 may repeatedly perform the scrolling with respect to the current screen based on the input signal of the user. The electronic device 10 may update the initial screen to the current screen as the scrolling is performed, and may update the information for performing the screenshot. The electronic device 10 may perform the scrolling based on the updated information and then synthesize the images obtained with respect to the respective views to generate the screenshot.

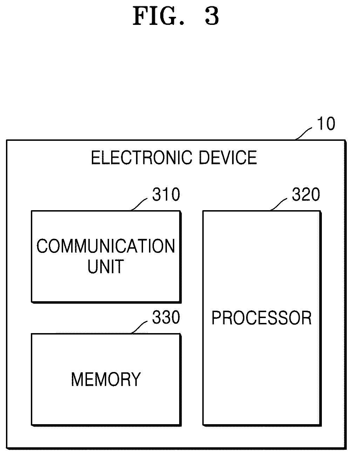

FIG. 3 is a schematic block diagram of an electronic device according to an embodiment of the present disclosure.

Referring to FIG. 3, the electronic device 10 according to an embodiment of the present disclosure may include a communication unit 310 performing communication with an external device (not shown), at least one processor 320 executing at least one instruction, and a memory 330 storing at least one instruction. However, not all the elements in FIG. 3 are essential elements. The electronic device 10 may be embodied with more components than those shown in FIG. 3, or may be embodied with fewer components than those shown in FIG. 3.

The communication unit 310 may communicate with an external device (not shown) via wired/wireless networks. Here, the external device (not shown) may denote another electronic device connected via near field communication. In an embodiment, the near field communication may denote communication via Bluetooth or Wi-Fi connection, but is not limited thereto.

The communication unit 310 according to an embodiment of the present disclosure may include at least one communication module such as a near field communication module, a wired communication module, a mobile communication module, a broadcast receiving module, etc. Here, the at least one communication module may denote a communication module capable of performing data transmission/reception via a network conforming to a communication standard such as a tuner receiving broadcast, Bluetooth, wireless LAN (WLAN), wireless fidelity (WiFi), wireless broadband (Wibro), world interoperability for microwave access (Wimax), CDMA, WCDMA, etc. The communication unit 310 according to an embodiment may receive an input signal about the screenshot from the user. The communication unit 310 may transmit a signal in order to display the screenshot obtained through the scrolling to the user. In an embodiment, the communication unit 310 may receive an input signal including information about a screen size, a scroll cycle, a view to be a target of screenshot, etc. in order to perform the screenshot.

The processor 320 controls overall operations of the electronic device 10. For example, the processor 320 may obtain the initial screen including a plurality of scrollable views based on the input signal about the screenshot received through the communication unit 310, by executing an instruction, etc. stored in the memory 330. The processor 320 may obtain information for performing the screenshot. The information for performing the screenshot may include the scroll distances of the plurality of views, whether the scrolling is possible, scroll cycle, or information about positions of the lower end lines of the plurality of views according to the scrolling, etc., but is not limited thereto. In an embodiment, the processor 320 may obtain images corresponding to the plurality of views in the current screen that is obtained according to the scrolling, and synthesize the images to obtain the screenshot. In an embodiment, the processor 320 may be implemented as a plurality of processors.

The memory 330 may store program commands or codes executed in the processor 320, and may store input/output data (e.g., scroll distance, scroll cycle, whether the scrolling is possible, position information of the lower end lines, input signal received for screenshots, etc.). In an embodiment of the present disclosure, the memory 330 may store information for performing the screenshot. The memory 330 may update the information for performing the screenshot according to the scrolling. In an embodiment, the memory 330 may update the current screen as the initial screen according to the scrolling. In an embodiment, the memory 330 may be implemented as a plurality of memories.

The memory 330 may include a storage medium of at least one type of a flash memory type, a hard disk type, a multimedia card micro type, a card type memory (e.g., an SD or XD memory, etc.), random access memory (RAM), a static RAM (SRAM), a read-only memory (ROM), an electrically erasable programmable ROM (EEPROM), a programmable (PROM), a magnetic memory, a magnetic disk, and an optical disk. In an embodiment of the present disclosure, the memory 330 may store data obtained through the communication unit 310.

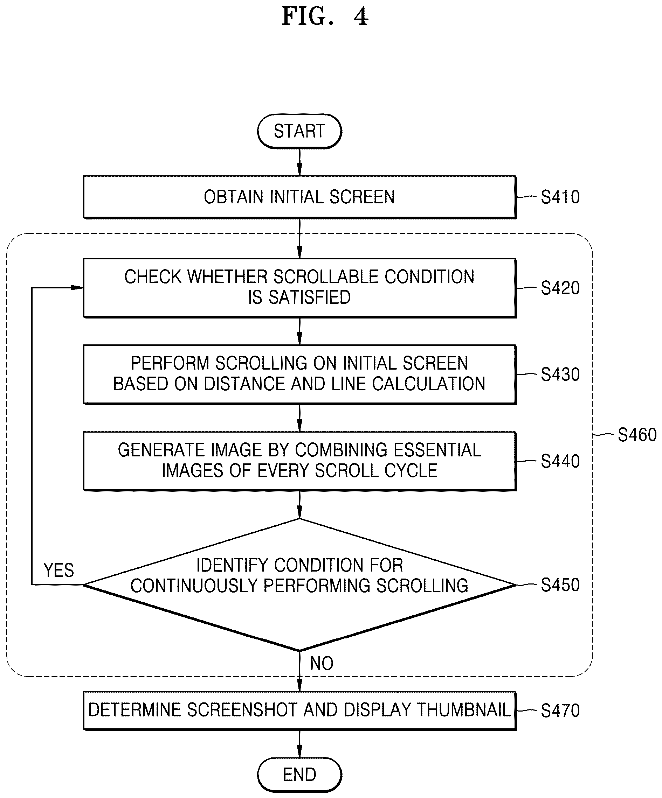

FIG. 4 is a flowchart schematically illustrating a method of providing a screenshot, by an electronic device according to an embodiment of the present disclosure, by using scrolling.

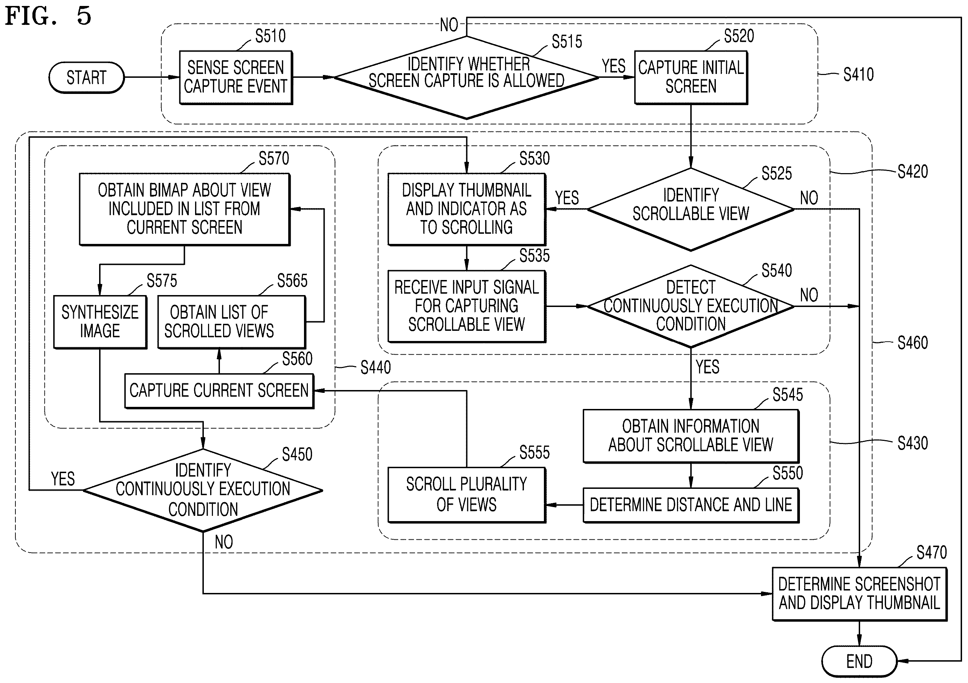

Referring to FIG. 4, operations that the electronic device 10 has to perform for providing the screenshot by using the scrolling are listed. FIG. 5 shows detailed operations of the electronic device 10. Hereinafter, descriptions provided with reference to FIG. 2 are omitted for brevity of the specification.

In operation S410, the electronic device 10 may obtain an initial screen. The initial screen may include a plurality of views that are scrollable. The plurality of views may include a first view and a second view having the same scroll direction. The plurality of views may further include at least one third view that is scrollable. In an embodiment, the scrolling direction of the at least one third view may be different from that of the first view and the second view.

In an embodiment, the electronic device 10 may identify whether capturing or screenshot of the initial screen is allowed. The electronic device 10 may not perform the capturing or screenshot with respect to the initial screen or the view included in the initial screen due to security issues or copyright issues. In an embodiment, some of the plurality of scrollable views included in the initial screen may not be captured or screenshotted. In an embodiment, the electronic device 10 may obtain a screenshot except for the view that is not allowed to be captured or screenshotted, based on the input signal from the user.

In an embodiment, based on an input signal for capturing the plurality of views, the electronic device 10 may identify whether the screenshot or capturing may be performed with respect to the corresponding view. When it is identified that the screenshot or capture of the plurality of views is possible, the electronic device 10 may perform operation S420.

In operation S420, the electronic device 10 may check whether the plurality of views satisfy scrollable conditions. The electronic device 10 may identify whether the plurality of views that are allowed to be screenshot or captured are scrollable. For example, when all of the plurality of views included in the initial screen are not scrollable, the electronic device 10 may perform the capturing or screenshot with respect to the initial screen. The electronic device 10 may finish the operation after obtaining the screenshot of the initial screen.

In an embodiment, when it is identified that the scrolling is possible with respect to at least one of the plurality of views included in the initial screen, the electronic device 10 may perform operation S430.

In operation S430, the electronic device 10 may perform the scrolling with respect to the initial screen based on the distance and line calculations. In an embodiment, the electronic device 10 may perform calculations of distances and lines with respect to the plurality of views included in the initial screen, respectively.

In an embodiment, the electronic device 10 may obtain information for performing the screenshot, and the information for performing the screenshot may include, but is not limited to, scroll distance, whether the scrolling is possible, information about the positions of the lower end lines of the plurality of views according to the scrolling, or scroll cycle.

In an embodiment, the electronic device 10 may calculate the scroll distance with respect to each of the views. The scroll distance may denote a minimum value between the scroll distance of a part included in the initial screen and a scroll distance of the other part than the initial screen, with respect to each of the views. Hereinafter, a detailed method of determining the scroll distance may be described with reference to FIGS. 6 and 8.

In an embodiment, the electronic device 10 may obtain the scroll cycle based on the scroll distance with respect to each view. The scroll cycle may denote the scroll distance for performing the scrolling with respect to the plurality of views. In an embodiment, the electronic device 10 may determine a minimum value between the scroll distance of the first view and the scroll distance of the second view, as the scroll cycle.

In an embodiment, the electronic device 10 may calculate position information about the lower end lines of the plurality of views. The information about the positions of the lower end lines in the plurality of views may denote the position where the lower end line of the initial screen is moved according to the scrolling. The electronic device 10 may identify images, from among the entire images of the plurality of views, to be synthesized in the screen, by using the position information about the lower end lines.

In an embodiment, the electronic device 10 may perform the scrolling with respect to the plurality of views included in the initial screen based on the obtained distance and lines. The electronic device 10 may perform the scrolling with respect to the scrollable views from among the plurality of views included in the initial screen, based on the calculated scroll cycle.

In an embodiment, the electronic device 10 may obtain the current screen that is moved by the scroll cycle with respect to the plurality of views included in the initial screen.

In operation S440, the electronic device 10 may generate an image by combining essential bitmaps for each scroll cycle. The electronic device 10 may obtain the image to be synthesized for each of the plurality of views in the current screen obtained according to each scroll cycle.

In an embodiment, the electronic device 10 may identify the essential bitmaps based on the information about the positions of the lower end lines of the plurality of views. A bitmap may include position information of each pixel in rectangular arrangement of pixels. The electronic device 10 may obtain the image to be synthesized in order to perform the screenshot on the plurality of views in the current screen, based on the identified bitmaps. The electronic device 10 may generate an image obtained by synthesizing the obtained image with the initial screen. Hereinafter, a detailed method is described below with reference to FIG. 8.

In operation S450, the electronic device 10 may identify a condition about whether the scrolling is continuously performed. The electronic device 10 may identify whether to continuously perform the scrolling based on the information for performing the screenshot.

In an embodiment, the information for performing the screenshot may include whether the scrolling is possible. Whether the scrolling is possible may denote information about whether each of the views is scrollable. For example, when the scrolling is performed once with respect to the first view and the second view, an image of the entire first view is obtained from the initial screen and the current screen and, with respect to the second view, there may be a part that is not included in the initial screen and the current screen obtained after performing the scrolling. When a second scrolling is performed in order to obtain the screenshot of the second view, the scrolling may not be performed with respect to the first view and may be only performed with respect to the second view.

In an embodiment, when the electronic device 10 identifies the condition for continuously performing the scrolling based on the information for performing the screenshot, scrolling according to next cycle may be performed from operation S420. In an embodiment, when the electronic device 10 identifies the condition that the scrolling is not continuously performed based on the information for performing the screenshot, the electronic device 10 may perform operation S470.

Operation S420 to operation S450 are processes in which the electronic device 10 performs the screenshot with respect to the plurality of scrollable views, and may be grouped as operation S460.

In operation S470, the electronic device 10 may determine the screenshot and display a thumbnail. In an embodiment, when it is identified that all of the plurality of views are not scrollable, the electronic device 10 stops scrolling and may determine the screenshot based on the image synthesized in operation S440. When the electronic device 10 receives an input signal or identifies a condition that the scrolling is not performed with respect to the plurality of views, the electronic device 10 stops scrolling and may determine the screenshot based on the image synthesized in operation S440. The electronic device 10 may display to the user a thumbnail indicating that the screenshot is finished, as the screenshot is determined.

FIG. 5 is a flowchart specifically illustrating a method of providing a screenshot, by an electronic device according to an embodiment of the present disclosure, by using scrolling.

Referring to FIG. 5, the operations that the electronic device 10 has to perform in order to provide the screenshot using the scrolling are described in detail. FIG. 5 is a diagram specifically illustrating the processes of FIG. 4, and the descriptions provided with reference to FIG. 4 are omitted for brevity of the specification.

Operation S410 may include operations S510 to S530. In operation S510, the electronic device 10 may sense a screen capture event. In an embodiment, the electronic device 10 may sense the screen capture event with respect to the initial screen, based on an input signal from the user. The initial screen may include a plurality of views and may include scrollable views. In operation S515, the electronic device 10 may identify whether the screen capture is allowed or not. In an embodiment, the plurality of views included in the initial screen may not be allowed to be screen-captured due to security issue or intellectual property issue. The electronic device 10 may identify whether the screen capture for each of the plurality of views included in the initial screen is possible. In an embodiment, when it is identified that the screen capture is not possible, the electronic device 10 may finish the operation. In an embodiment, when it is identified that the screen capture of the initial screen is possible, the electronic device 10 may capture the initial screen in operation S520. In an embodiment, the electronic device 10 may set a size of the initial screen to be captured based on the input signal.

Operation S420 may include operations S525 to S540. In operation S525, the electronic device 10 may identify whether there is a scrollable view. The electronic device 10 may identify whether there is the scrollable view from among the plurality of views included in the initial screen. In an embodiment, when it is identified that the plurality of views are not scrollable, the electronic device 10 may determine the initial screen as a screenshot and may display a thumbnail (S470). In an embodiment, when it is identified that at least one of the plurality of views is scrollable, the electronic device 10 may perform operation S530. In operation S530, the electronic device 10 may display a thumbnail and an indicator related to the scrolling. The electronic device 10 may display to the user the thumbnail and indicator indicating that the scrolling is possible. In an embodiment, the thumbnail may be indicated at a corner of the screen. The thumbnail may include a real-time image of the entire screen. The indicator may be displayed to the user in order to receive an input signal about whether to perform the capturing of the scrollable view. In operation S535, the electronic device 10 may receive a capture input signal with respect to the scrollable view. In an embodiment, the electronic device 10 may receive an input signal from the user, the input signal indicating whether to perform the capturing of the scrollable view, based on the indicator displayed in operation S530. In operation S540, the electronic device 10 may identify a continuous execution condition based on the received input signal. In an embodiment, when the electronic device 10 identifies a signal for stopping the operation for the screenshot as a result of identifying the continuous execution condition, the electronic device 10 may determine an image at the current step as the screenshot and may display the thumbnail (S470). In an embodiment, when receiving a signal for continuously performing the capturing of the scrollable view from the user, the electronic device 10 may perform operation S545.

Operation S430 may include operations S545 to S555. In operation S545, the electronic device 10 may obtain information about the scrollable view. The electronic device 10 may obtain information for performing the screenshot operation on the view that is to be captured. The information for performing the screenshot may include the scroll distance, whether the scrolling is possible, information about positions of the lower end lines of the plurality of views according to the scrolling, or scroll cycle, but is not limited thereto. In operation S550, the electronic device 10 may determine distances and lines with respect to the plurality of scrollable views. The electronic device 10 may determine the scroll distances of the plurality of views, and the scroll distance may denote a minimum value between the scroll distance of the part included in the initial screen and the scroll distance of the other part than the initial screen, with respect to each of the views. The electronic device 10 may determine the position information of the lower end lines of the plurality of scrollable views, and the position information of the lower end lines may denote that the position of the lower end line of the initial screen moved according to the scrolling. In operation S555, the electronic device 10 may perform the scrolling with respect to the plurality of views based on the distances and lines. In an embodiment, the electronic device 10 may determine the scroll cycle based on the scroll distances of the plurality of views. The scroll cycle may denote the scroll distance for performing the scrolling with respect to the plurality of views. The electronic device 10 may perform the scrolling with respect to the scrollable views, from among the plurality of views, based on the scroll cycle. The electronic device 10 may obtain a current screen moved by the scroll cycle with respect to the scrollable views from among the plurality of views.

Operation S440 may include operations S560 to S575. In operation S560, the electronic device 10 may capture the current screen resulting from the scrolling of the initial screen based on the scroll cycle. In an embodiment, the electronic device 10 may obtain the current screen obtained by scrolling the plurality of scrollable views by the scroll cycle, and perform the capturing of the current screen. In operation S565, the electronic device 10 may obtain a list of the views that are scrolled. The electronic device 10 may obtain a list indicating the views that are scrolled, from among the plurality of views included in the initial screen. For example, when the first view is scrolled and the second view is not scrolled, from among the plurality of scrollable views, the list may include information indicating the first view. In operation S570, the electronic device 10 may obtain a bitmap with respect to the view included in the list in the current screen. In an embodiment, the electronic device 10 may obtain the bitmap based on the position information of the lower end line of each view, with respect to the views that are scrolled and included in the list. The bitmap may include information related to a position of each pixel in a square arrangement of pixels. In an embodiment, the bitmap may denote position information about the image that is not included in the initial screen as the scrolling is performed, in the current screen. Hereinafter, detailed descriptions are provided with reference to FIGS. 6 and 8. In operation S575, the electronic device 10 may synthesize an image with the initial screen based on the obtained bitmap. The electronic device 10 may obtain an image of the view to be synthesized with the initial screen, based on the bitmap obtained in operation S570. The electronic device 10 may synthesize the obtained image with the initial screen.

In operation S450, the electronic device 10 may identify a continuous execution condition. In an embodiment, when identifying an input signal for continuously performing the capturing, the electronic device 10 may return to operation S530 and repeatedly perform the operations. In an embodiment, when the continuous execution condition is not identified, the electronic device 10 may perform operation S470.

In operation S470, the electronic device 10 may determine the screenshot and display the thumbnail, based on the image combined in operation S575. In an embodiment, when identifying that the scrolling may not be performed with respect to all of the plurality of views or receiving an input signal for stopping the screenshot operation from the user, the electronic device 10 may stop the scrolling and may determine the screenshot based on the image combined in operation S440. The electronic device 10 may display to the user a thumbnail indicating that the screenshot is finished, as the screenshot is determined. In an embodiment, the thumbnail may include an image of the determined screenshot.

FIG. 6 is a diagram illustrating a method of determining a distance and a line for providing a screenshot, by an electronic device according to an embodiment of the present disclosure.

Referring to FIG. 6, the method of determining the distance and line for each scroll cycle in order to provide screenshots with respect to three scrollable views is described below. In an embodiment, an initial screen 620 obtained for the screenshot may include a plurality of scrollable views 610a, 610b, and 610c.

In an embodiment, the electronic device 10 may obtain information for performing screenshot on the plurality of scrollable views 610a, 610b, and 610c. The information for performing the screenshot may include scroll cycles 630a and 630b, the scroll distance, whether the scrolling is possible, or information 640a and 640b about positions of the lower end lines of the plurality of views according to the scrolling, but is not limited thereto.

The electronic device 10 may determine the scroll distance with respect to the plurality of scrollable views 610a, 610b, and 610c. The scroll distance may denote a minimum value between the scroll distance of a part included in the initial screen and a scroll distance of the other part than the initial screen, with respect to each of the views. For example, because a current distance 650 of a third view 610c included in an initial screen 620 in a first cycle is less than a remaining distance 660 of the third view excluded from the initial screen 620, the scroll distance of the third view 610c may denote the current distance 650 included in the current screen 620.

Therefore, a first scroll distance with respect to a first view 610a in the first cycle may denote a scroll distance of a part of the first view 610a, which is included in the initial screen 620, the first scroll distance with respect to the second view 610b denotes a scroll distance of a part of the second view 610b, which is included in the initial screen 620, and the first scroll distance with respect to the third view 610c denotes a scroll distance 650 of a part of the third view 610c, which is included in the initial screen 620.

Also, a second scroll distance with respect to the first view 610a in a second cycle denotes a scroll distance of a part of the first view 610a, which is included in the first scroll cycle 630a, the second scroll distance with respect to the second view 610b denotes the scroll distance of a part of the second view 610b, except for the first scroll cycle 630a, and the second scroll distance with respect to the third view 610c denotes the scroll distance of a part of the third view 610c, which is included in the first scroll cycle 630a.

The electronic device 10 may determine the scroll cycles 630a and 630b based on the plurality of views 610a, 610b, and 610c. The scroll cycle may denote the scroll distance for performing the scrolling with respect to the plurality of views. The electronic device 10 may identify a minimum value from among the scroll distances with respect to the plurality of views 610a, 610b, and 610c, as the screen cycle. For example, the first scroll cycle 630a may denote the first scroll distance of the second view 610b, which has the minimum value from among the first scroll distances of the plurality of views 610a, 610b, and 610c. Also, the second scroll cycle 630b may denote the second scroll distance of the second view 610b.

Whether the scrolling is possible may denote information about whether the scrolling may be further performed with respect to each of the plurality of views as the scrolling is repeatedly performed in order to perform the screenshot. For example, when the scrolling is performed with respect to the plurality of views 610a, 610b, and 610c to the second cycle, the entire image of the second view 610b may be obtained. When the scrolling is performed in the third cycle, the scrolling may not be performed with respect to the second view 610b. Therefore, information for performing the screenshot operation may include information indicating that the scrolling is impossible for the second view 610b (e.g., indicator '0'), and information indicating that the scrolling is possible with respect to the first view 610a and the third view 610c (e.g., indicator '1').

When the scrolling is finished with respect to the plurality of views 610a, 610b, and 610c according to the second scroll cycle, the scrolling may not be further performed with respect to the second view 610b, and thus, the scrolling according to the third scroll cycle may be only performed with respect to the first view 610a and the third view 610c. Therefore, the third scroll cycle may be determined as a minimum value between the third scroll distance of the first view 610a and the third scroll distance of the third view 610c.

The information about the positions of the lower end lines in the plurality of views according to the scrolling may denote the position where the lower end line of the initial screen is moved according to the scrolling. For example, as the scrolling is performed by the first scroll cycle 630a with respect to the plurality of views 610a, 610b, and 610c included in the initial screen 620, a line 640a of the first cycle, that is, the information of the position of the lower end line of the initial screen 620, may be determined.

Also, as the scrolling is moved by the second scroll cycle 630b, a line 640b of the second cycle may be determined. The electronic device 10 may obtain images about the plurality of views 610a, 610b, and 610c that are to be synthesized with the initial screen, based on the information 640a and 640b of the lower end lines. Hereinafter, a detailed method is described below with reference to FIGS. 8 and 9.

FIG. 7 is a flowchart illustrating a method of repeatedly performing the scrolling, by an electronic device according to an embodiment of the present disclosure.

The flowchart of FIG. 7 illustrates operations of the electronic device 10 for repeatedly performing the scrolling with respect to the plurality of scrollable views. The electronic device 10 may perform the scrolling with respect to the initial screen, and then, repeatedly perform the scrolling by identifying the continuous execution condition with respect to the plurality of views. The continuous execution condition may include whether at least one scrollable view is included in the plurality of views, a user input signal, etc.

In operation S710, the electronic device 10 may update a list of the scrollable views. The list may include information indicating the scrollable views from among the plurality of views.

In an embodiment, the electronic device 10 may obtain information for performing the screenshot operation. The electronic device 10 may identify whether the scrolling is possible with respect to each of the plurality of views, based on the obtained information.

Whether to perform the scrolling may denote information about whether each of the views is scrollable. For example, when the scrolling is performed once with respect to the first view and the second view, an image of the entire first view is obtained through the initial screen and the current screen and, with respect to the second view, there may be a part that is not included in the initial screen and the current screen obtained after performing the scrolling. When a second scrolling is performed in order to obtain the screenshot of the second view, the scrolling may not be performed with respect to the first view and may be only performed with respect to the second view. Therefore, the information for performing the screenshot may include information indicating that the scrolling is not possible with respect to the first view (e.g., indicator '0') and information indicating that the scrolling is possible with respect to the second view (e.g., indicator '1').

In an embodiment, the electronic device 10 may generate a list of the scrollable views based on whether the scrolling is possible, and update the list at every scroll cycle.

In operation S720, the electronic device 10 may identify whether the scrolling is to be performed. The electronic device 10 may identify whether the scrolling is to be performed, based on the user input signal or the updated list.

In an embodiment, the electronic device 10 may display to the user a thumbnail or an indicator indicating that the scrolling is possible, as the list of the scrollable views is updated in operation S710. The electronic device 10 may identify whether the scrolling is possible based on the user input signal or whether there is a view included in the list.

In an embodiment, when there is no view included in the list or when a signal for stopping the scrolling is received from the user, the electronic device 10 may finish the scrolling with respect to the plurality of views. In an embodiment, when there is information about at least one view is included in the list or when a signal for performing the scrolling is received from the user, the electronic device 10 may perform operation S730.

In operation S730, the electronic device 10 may perform the scrolling based on the scroll cycle. the electronic device 10 may identify the scroll cycle based on the information for performing the screenshot operation.

The scroll cycle may denote the scroll distance for performing the scrolling with respect to the plurality of views. The electronic device 10 may determine the scroll distance based on the scroll distances of the plurality of views, in order to perform the scrolling so that the same content may not redundantly appear in the screenshot. For example, when there are the first view and the second view that are scrollable, the electronic device 10 may determine the minimum value between the scroll distance of the first view and the scroll distance of the second view as the scroll cycle.

The electronic device 10 may obtain a current screen moved by the scroll cycle with respect to the plurality of scrollable views. The electronic device 10 may perform the screenshot or capturing of the current screen. In an embodiment, the electronic device 10 may obtain images corresponding to the plurality of scrollable views from the current screen, based on the information for performing the screenshot operation.

In operation S740, the electronic device 10 may detect the continuous condition for each view. The electronic device 10 may identify whether the scrolling is possible to be performed on each of the plurality of views.

In an embodiment, when at least one of the plurality of views is not scrollable, the electronic device 10 may update the list of the scrollable views (S710). For example, when the scrolling of the first view is finished in operation S730 and the scrolling may not be further performed on the first view from among the plurality of views, the electronic device 10 may delete information about the first view from the list.

In an embodiment, when the plurality of views are all scrollable, the electronic device 10 may return to operation S720 and identify whether the scrolling is performed. When identifying that the scrolling is not performed with respect to the plurality of views after performing operation S720, the electronic device 10 may finish the operation, and when identifying the condition of performing the scrolling, the electronic device 10 may perform operation S730.

In an embodiment, the electronic device 10 may synthesize a plurality of images corresponding to the plurality of views with the initial screen in order to obtain a screenshot including the image corresponding to the plurality of views in each cycle as the scrolling is repeatedly performed. In an embodiment, the electronic device 10 may obtain the screenshot by synthesizing the plurality of images with the initial screen by using the bitmaps.

FIG. 8 is a diagram illustrating an example in which an electronic device according to an embodiment of the present disclosure obtains a screenshot by using scrolling.

Referring to FIG. 8, the electronic device 10 may perform the screenshot operation with respect to a plurality of scrollable views 810a and 810b. The first view 810a that is scrollable may be divided into regions A, B, C, and D according to the scroll cycle or the position information of the lower end lines. The second view 810b that is scrollable may be divided into regions E and F according to the scroll cycle or the position information of the lower end lines.

In an embodiment, an initial screen 830 may include regions A and B in the scrollable first view 810a, and the region E in the scrollable second view 810b. The electronic device 10 may obtain information for performing the screenshot with respect to the first view 810a and the second view 810b. The information for performing the screenshot may include whether the scrolling is possible, the scroll distance, the scroll cycle, information about the lower end line, etc., but is not limited thereto. The electronic device 10 may perform the scrolling with respect to the plurality of views 810a and 810b and obtain the screenshot, based on the information for performing the screenshot operation.

The scroll distance of each view may denote a minimum value between the scroll distance of a part included in the initial screen and the scroll distance of a part rather than the initial screen. For example, the scroll distance with respect to the first view 810a may denote the distance of the regions A and B or the distance of the regions C and D, because the scroll distance of the regions A and B included in the initial screen is equal to the scroll distance of the regions C and D that are not included in the initial screen. The scroll distance with respect to the second view 810b may also denote the distance of the region E or region F, because the region E included in the initial screen and the region F that is not included in the initial screen have the same scroll distance.

The scroll cycle is a scroll distance for performing the scrolling with respect to the plurality of views 810a and 810b without overlapping regions, and may denote the minimum value of the scroll distances of the plurality of views 810a and 810b. For example, because the scroll distance of the second view 810b is less than the scroll distance of the first view 810a, the scroll distance of the second view 810b may be determined as a first scroll cycle 820a.

The electronic device 10 may perform the scrolling with respect to the first view 810a and the second view 810b based on the first scroll cycle 820a. The current screen obtained after performing the first scrolling (840) may include regions corresponding to B and C of the first view 810a and a region corresponding to F of the second view 810b.

The electronic device 10 may obtain images corresponding to the plurality of views 810a and 810b included in the current screen. In an embodiment, the electronic device 10 may obtain images corresponding to the plurality of views to be combined with the initial screen, based on the position information of the lower end line for obtaining the screenshot from the current screen. For example, as the scrolling is moved by the first scroll cycle 820a with respect to the initial screen 830, the lower end line of the initial screen is moved between 2 and 3 on a y-axis (850). The electronic device 10 may identify, based on the position information 850 of the lower end line, the parts of the plurality of views 810a and 810b included in the current screen, which are not included in the initial screen, are respectively regions corresponding to C and F. The electronic device 10 may obtain a screenshot 860 that is obtained by obtaining images of the regions corresponding to C and F and combining the images with the initial screen 830.

In an embodiment, the electronic device 10 may obtain bitmap information about the plurality of views 810a and 810b based on the position information of the lower end line. A bitmap may include position information of the plurality of views in respective regions in a rectangular arrangement of pixels. The electronic device 10 may obtain images corresponding to the plurality of views 810a and 810b from the current image by using bitmap information.

In an embodiment, the electronic device 10 may synthesize the obtained images with respect to the plurality of views 810a and 810b with the initial screen, to obtain a screenshot 860 after performing the first scrolling. The electronic device 10 may synthesize a region corresponding to the region C that is the image of the first view 810a obtained after the first scrolling, with the regions corresponding to the regions A and B of the first view 810a included in the initial screen. Also, the electronic device 10 may synthesize a region corresponding to the region F that is the image of the second view 810b obtained after the first scrolling, with the region corresponding to the region E of the second view 810b included in the initial screen.

In an embodiment, the electronic device 10 may update the information for performing the screenshots on the first view 810a and the second view 810b after performing the first scrolling. For example, because the entire image of the second view 810b is obtained according to the first scrolling, an indicator (e.g., '0') indicating that the scrolling may not be performed on the second view 810b may be updated. Also, because the scrollable view is the first view 810a, the scroll distance of the first view 810a is updated, and the scroll distance of the first view 810a may be determined as the scroll cycle. The electronic device 10 may perform a second scrolling on the first view 810a and obtain an image of the region corresponding to D of the first view 810a from the current screen. The electronic device 10 may obtain the screenshot by combining the image of the region corresponding to D of the first view 810a obtained according to the second scrolling, with the screenshot 860 obtained after the first scrolling.

In an embodiment, the electronic device 10 may repeatedly perform the scrolling and the screenshot by identifying the continuous execution condition. When the scrolling and the screenshot operations are finished, the electronic device 10 may display the determined screenshot to the user via the thumbnail or indicator. In an embodiment, when obtaining the screenshot through the combination of region D of the first view 810a, the electronic device 10 may finish the scrolling and screenshot operations. The electronic device 10 may display the obtained screenshot to the user via the thumbnail or indicator.

FIG. 9 is a diagram illustrating a method of determining a scroll cycle according to an embodiment of the present disclosure.

Referring to FIG. 9, the method of determining the scroll distance and the scroll cyclewhile performing the scrolling with respect to scrollable first view 910a and second view 910b two times is shown.

The electronic device 10 may perform the screenshot with respect to the plurality of scrollable views 910a and 910b. The electronic device 10 may obtain an initial screen 920 including parts of the first view 910a and the second view 910b.

In an embodiment, the electronic device 10 may obtain information for performing the screenshot operations with respect to the scrollable first view 910a and second view 910b. The information for performing the screenshot may include whether the scrolling is possible, the scroll distance, the scroll cycle, position information about the lower end line, etc., but is not limited thereto.

The scroll distance may denote a minimum value between the scroll distance of a part included in the initial screen and a scroll distance of the other part excluded from the initial screen, with respect to each of the views. For example, the electronic device 10 may calculate the scroll distances with respect to the first view 910a and the second view 910b. In the first view 910a, between a distance 1.1 930a included in the initial screen 920 and a distance 1.2 930b that is not included in the initial screen 920, a smaller value, that is, the distance 1.2 930b, is identified as a first scroll distance of the first view 910a. Also, in the second view 910b, between a distance 2.1 930c included in the initial screen 920 and a distance 2.2 930d that is not included in the initial screen 920, a smaller value, that is, the distance 2.1 930c, is identified as a first scroll distance of the second view 910b.

The scroll cycle may denote the scroll distance for performing the scrolling with respect to the plurality of views. For example, the electronic device 10 may identify a smaller value between the first scroll distance 930b of the first view 910a and the first scroll distance 930c of the second view 910b, that is, the first scroll distance 930b of the first view 910a, as a first scroll cycle 940a.

In an embodiment, the electronic device 10 may perform the scrolling with respect to the first view 910a and the second view 910b according to the first scroll cycle 940a. The electronic device 10 may obtain the image corresponding to the plurality of views in the current screen, according to the scrolling. For example, the electronic device 10 may obtain an image 1 (950a) of the first view 910a of the first cycle and an image 2 (950b) of the second view 910b of the first cycle, according to the scrolling is performed based on the first scroll cycle 940a. The electronic device 10 may combine the obtained images 950a and 950b with the initial screen based on the position information of the lower end line or bitmap information.

The electronic device 10 may update the information for performing the screenshot according to the scrolling. For example, the entire image of the first view 910 is obtained according to the scrolling in the first cycle, and thus, an additional scrolling of the first view 910a is not possible. Therefore, with respect to whether the screenshot is possible, the first view 910a may be updated as the indicator (e.g., '0') indicating that the scrolling is not possible. Also, because only the second view 910b is possible to perform the screenshot, the electronic device 10 may determine the scroll distance of the second view as a second scroll cycle 940b. The electronic device 10 may perform the scrolling according to the second scroll cycle 940b and obtain an image 3 950c of the second view of the second cycle. The electronic device 10 may combine the obtained image 3 (950c) with the previously obtained screenshot.

In an embodiment, when the plurality of views 910a and 910b are not possible to be scrolled or when receiving an input signal for stopping the scrolling, the electronic device 10 may terminate the operation. The electronic device 10 may provide the user with the obtained screenshot via the thumbnail or indicator as the operation is finished. For example, the electronic device 10 may finish the scrolling operation with respect to all of the views by performing the scrolling with respect to the second view 910b based on the second scroll cycle 940b. The electronic device 10 may display to the user an indicator indicating that the scrolling or screenshot operation is finished or the determined screenshot.

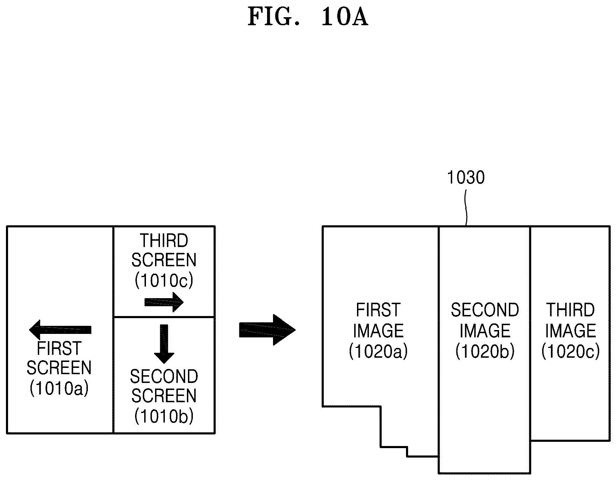

FIG. 10A is a diagram illustrating a method of providing a screenshot, when there are views scrollable in various directions according to an embodiment of the present disclosure.

Referring to FIG. 10A, the initial screen may include a plurality of scrollable views. In an embodiment, scrolling directions of the plurality of scrollable views may be all the same. Alternatively, the scrolling directions of the plurality of scrollable views may be different from each other.

In an embodiment, the electronic device 10 may split the plurality of views into at least one screen according to the scrolling directions. For example, the electronic device 10 may split the entire screen into a first screen 1010a including a view that is scrollable in a left direction, a second screen 1010b including a view that is scrollable downward, and a third screen 1010c including a view that is scrollable in a right direction. In an embodiment, the first screen 1010a, the second screen 1010b, and the third screen 1010c may each include a plurality of scrollable views.

In an embodiment, the electronic device 10 may perform operations for obtaining screenshots with respect to the respective screens 1010a, 1010b, and 1010c. The method of obtaining the screenshot from the screen is described above with reference to FIGS. 2 to 5.

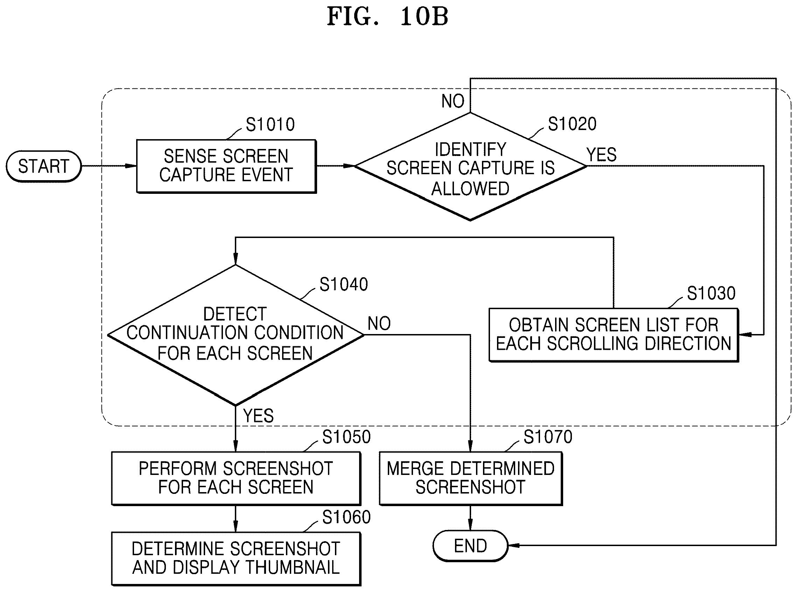

In an embodiment, as a result of performing the screenshot operation on each of the first, second, and third screens 1010a, 1010b, and 1010c, the electronic device 10 may obtain images 1020a, 1020b, and 1020c of the plurality of views. The electronic device 10 may obtain one screenshot 1030 by combining the obtained image. Hereinafter, detailed operations of the electronic device 10 are described with reference to FIG. 10B.

FIG. 10B is a flowchart illustrating a method of providing a screenshot, when there are views scrollable in various directions according to an embodiment of the present disclosure.

Hereinafter, descriptions provided with reference to FIGS. 4 and 5 are omitted for brevity of the specification.

In operation S1010, the electronic device 10 may sense a screen capture event. The electronic device 10 sensing the screen capture event may identify whether the screen capturing is allowed or not, in operation S1020. The plurality of views that are the targets of screen capture may include a view that is not allowed to be captured or screenshot due to security issues or copyright issues. The electronic device 10 may finish the operation when all of the plurality of views are not possible to be captured or screenshot. When identifying that the screen capture is possible, the electronic device 10 may perform operation S1030.

In operation S1030, the electronic device 10 may obtain a screen list for each scrolling direction. The screen that is the target to be captured may include a plurality of scrollable views.

In an embodiment, the plurality of views may include views that are scrollable in different directions. In order to perform the screenshot on the views that are scrollable in different directions, the electronic device 10 may obtain screens that are obtained by splitting the plurality of views according to the scrolling directions and may obtain a list including information about the obtained screens. The list may include information about the screens split according to the scrolling directions, information about scrolling directions, etc., but is not limited thereto.

In operation S1040, the electronic device 10 may detect a continuation condition for each screen. The electronic device 10 may detect the continuation condition regarding the scrolling or screenshot operation for each of the screens that are obtained by splitting the plurality of views according to the scrolling directions.

In an embodiment, the electronic device 10 obtains information for performing the screenshot for each screen, and may detect the continuation condition based on whether the scrolling is possible with respect to the plurality of views, the scroll cycle, the scroll distance, or position information of the lower end line included in the information.

In an embodiment, when the electronic device 10 detects a continuation condition for at least one of the screens included in the list obtained in operation S1030, the electronic device 10 may perform operation S1050.

In an embodiment, when the electronic device 10 does not find the continuation condition with respect to all of the screens included in the list obtained in operation S1030, the electronic device 10 may perform operation S1070.

In operation S1050, the electronic device 10 may perform the screenshot for each of the split screens according to the scrolling directions. The electronic device 10 may perform the scrolling and obtain the screenshot with respect to the plurality of views, based on the information for performing the screenshot obtained for each screen. A detailed method for performing the scrolling and obtaining the screenshot is described above with reference to FIGS. 2 to 5.

In operation S1060, the electronic device 10 may determine the screenshot and display a thumbnail. The electronic device 10 may display the determined screenshot to the user via the thumbnail or indicator. In an embodiment, when it is identified that the scrolling may not be performed with respect to all of the plurality of views included in the screen for each of the screens, the electronic device 10 stops scrolling on the corresponding screen, and may determine the screenshot based on the image obtained in operation S1050.

When the electronic device 10 receives an input signal or identifies a condition that the scrolling is not performed with respect to the plurality of views, the electronic device 10 stops scrolling and may determine the screenshot based on the image obtained in operation S1050. The electronic device 10 may display a thumbnail indicating that the screenshot is finished to the user, as the screenshot is determined.

In an embodiment, the electronic device 10 may perform operation S1040 as the screenshot is determined. When the electronic device does not find the continuation condition with respect to all of the split screens according to the scrolling directions, the electronic device may perform operation S1070.

In operation S1070, the electronic device 10 may combine the determined screenshots. The electronic device 10 may generate one screenshot by combining the screenshots for respective screens, which are determined in operation S1060. In an embodiment, the electronic device 10 may combine the screenshots determined based on the bitmaps of the split screens.

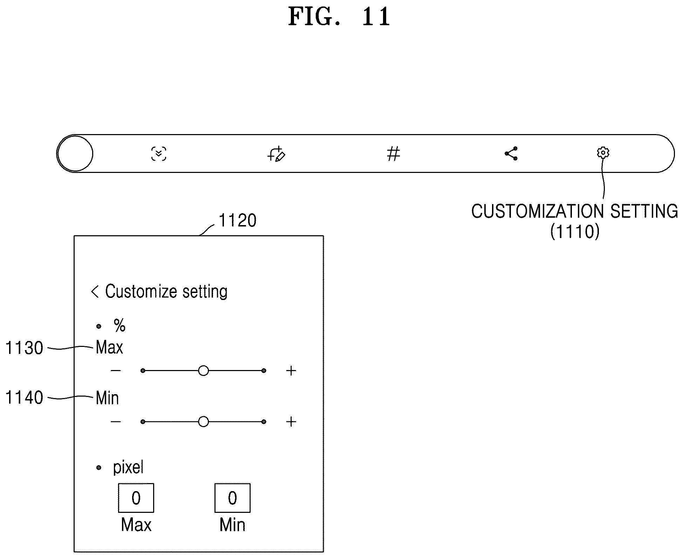

FIG. 11 is a diagram illustrating a method of customizing settings for providing a screenshot, according to an embodiment of the present disclosure.

Referring to FIG. 11, the electronic device 10 may perform settings for providing a screenshot based on a user input signal.

In an embodiment, the electronic device 10 may display to the user an indicator for customization setting 1110 with respect to the screenshot. The electronic device 10 may receive an input signal from the user (e.g., a signal through touch, a voice signal, an input signal through button, etc.) based on the corresponding indicator. The electronic device 10 may display a thumbnail 1120 for setting customization in order to perform the screenshot based on the received input signal.

The electronic device 10 may set a size of an initial screen obtained for performing the screenshot. Also, the electronic device 10 may set a maximum value or a minimum value of the scroll cycle, for performing the screenshot.

For example, the electronic device 10 may receive an input signal about the size of the initial screen or the maximum value of the scroll cycle, and may set a maximum value of the size of the initial screen or the maximum value of the scroll cycle based on the received signal (1130). Also, a minimum value of the size of the initial screen or a minimum value of the scroll cycle may be set (1140) based on the input signal.

When the maximum value of the scroll cycle according to the customization setting is less than the scroll cycle identified by the information for performing the screenshot, the electronic device 10 may perform the scrolling with respect to the plurality of views with the scroll cycle according to the customization setting.

FIG. 12 is a flowchart illustrating a method of automatically providing a screenshot according to an embodiment of the present disclosure.

Referring to FIG. 12, the electronic device 10 may automatically perform the operation for providing the screenshot according to the settings. Hereinafter, detailed operations for obtaining the screenshot are provided with FIGS. 2 to 5. The method of automatically providing the screenshot is a method of scrolling and providing screenshots until the continuation condition is not detected with respect to the plurality of views without receiving any input signal other than the input signal indicating that the screenshot operation is performed from the user.

In operation S1210, the electronic device 10 may receive an input signal for automatic screenshot operation. In order to perform the screenshot operations with respect to the plurality of scrollable views, the electronic device 10 may receive an input signal for indicating that the automatic screenshot operation is performed from the user.

In an embodiment, the electronic device 10 may display an indicator or thumbnail indicating whether the automatic screenshot operation is performed. Based on the indicator or thumbnail, the electronic device 10 may receive from the user an input signal including information indicating that the automatic screenshot operation is performed.

In operation S1220, the electronic device 10 may perform the automatic scrolling and screenshot operations. The electronic device 10 may perform the scrolling and the screenshot operation based on the information for performing the screenshot operations on the plurality of scrollable views.

In an embodiment, the electronic device 10 may identify whether the plurality of views included in the initial screen are allowed to be screenshot or captured. When identifying that the screenshot or capture of some of the views is not possible, the electronic device 10 may perform the automatic scrolling and screenshot only with respect to the views that are allowed to be screenshot or captured.

In an embodiment, the electronic device 10 may perform the scrolling with respect to the plurality of views based on the scroll cycle, and may obtain the image of the view which is scrolled. The electronic device 10 may obtain a screenshot by combining the obtained images.

In operation S1230, the electronic device 10 may detect the continuation condition. The electronic device 10 may detect conditions about whether the scrolling or screenshot operation is continuously performed with respect to the plurality of scrollable views.

In an embodiment, when the scrolling is possible with respect to at least one of the plurality of views without an input signal received from the user, the electronic device 10 may identify that there is a continuation condition. When identifying the continuation condition, the electronic device 10 may repeatedly perform operation S1220. For example, when the plurality of views include first to fourth views and when at least one of the first to fourth views is scrollable, the scrolling is performed and an image of the scrolled view may be obtained in operation S1220.

In an embodiment, when identifying that the scrolling or the screenshot operation is not possible with respect to all of the plurality of views, the electronic device 10 may perform operation S1240. For example, when the scrolling may not be further performed with respect to all of the first to fourth views included in the screen, the electronic device 10 may perform operation S1240.

In operation S1240, the electronic device 10 may determine the screenshot and display a thumbnail. In an embodiment, when it is identified that all of the plurality of views are not scrollable, the electronic device 10 stops scrolling, and may determine the screenshot based on the image synthesized in operation S1220. The electronic device 10 may display a thumbnail indicating that the screenshot is finished to the user, as the screenshot is determined. The electronic device 10 may display the determined screenshot to the user via the thumbnail or indicator.

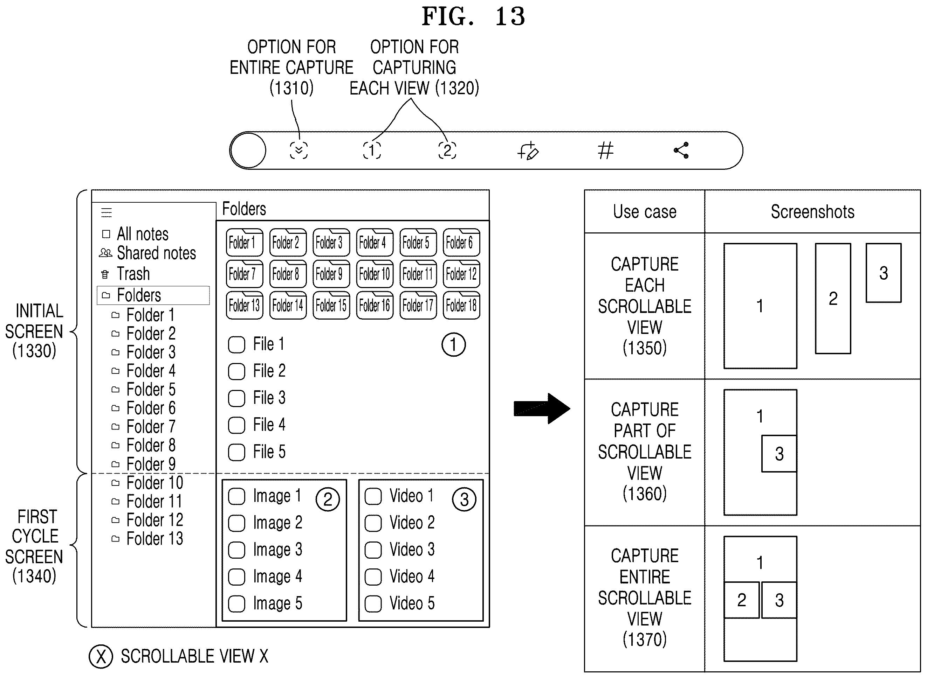

FIG. 13 is a diagram illustrating a method of providing a screenshot through customization for each scroll cycle, according to an embodiment of the present disclosure.

Referring to FIG. 13, a view to be captured may be selected or a region included in the screenshot may be set in every scroll cycle.

In an embodiment, the electronic device 10 may provide an option for setting a target of the screenshot. The electronic device 10 may provide an option 1310 in which the plurality of views included in the screen are entirely captured or an option 1320 in which the capturing is performed with respect to each view. For example, when the option 1320 in which each of the views is captured is set, the electronic device 10 may perform the screenshot only with respect to the corresponding view from among the plurality of views and may not include other views.

In an embodiment, the electronic device 10 may set the target for the screenshot at every scroll cycle. For example, the electronic device 10 may set the screenshot to be performed only for the first view, with respect to an initial screen 1330. The electronic device 10 may set the screenshot to be performed for the second view and the third view, except for the first view, with respect to a first cycle screen 1340.

In an embodiment, the electronic device 10 may separately capture each of the scrollable views or capture the views in one screen. For example, the electronic device 10 may separately perform the capturing with respect to each of the first view, second view, and third view that are scrollable (1350). The electronic device 10 may separately provide the user with the screenshots of the first to third views. Alternatively, the electronic device 10 may perform the capturing only with respect to some of the plurality of scrollable views (1360). For example, the capturing may be performed on the first to third views that are scrollable, except for the second view. Also, the electronic device 10 may perform the capturing with respect to the all of the plurality of scrollable views (1370). For example, the electronic device 10 may capture the plurality of scrollable views in one screen (1370), not separately capturing the plurality of scrollable views, and display the captured image to the user.

According to an embodiment of the present disclosure, a method of, performed by an electronic device, providing a screenshot may be provided. The above method may obtain an initial screen including a plurality of views that are scrollable, the plurality of views including a first view and a second view, and obtain information including a scroll distance of the first view and a scroll distance of the second view for performing a screenshot operations with respect to the first view and the second view. The scroll distance of the first view may be a minimum value between a scroll distance of a part of the first view, which is included in the initial screen, and a scroll distance of a part of the first view, excluded from the initial screen, and the scroll distance of the second view is a minimum value between a scroll distance of a part of the second view, which is included in the initial screen, and a scroll distance of a part of the second view, excluded from the initial screen. The method may determine a minimum value between the scroll distances of the first and second views as a scroll cycle, and obtain the current screen moved by the scroll cycle with respect to the first view and the second view based on an input scroll signal. The method may obtain images corresponding to the first view and the second view included in the current screen, and synthesize the images of the first view and the second view included in the current screen with the initial screen to obtain a screenshot.

According to an embodiment, the initial screen may include at least one third view that is scrollable.

According to an embodiment, the method may update the initial screen as the obtained current screen when the current screen is obtained. The method may update the information for performing the screenshot based on the updated initial screen, and the scroll cycle may be determined based on the updated information for performing the screenshot.

According to an embodiment, the method may identify a scrollable view between the first view and the second view, based on the information for performing the screenshot, and update a screen that is moved from the scrollable view by the determined scroll cycle as the current screen. The method may merge an image that is not included in the initial screen, in the scrollable view included in the updated current screen, with the screenshot.

According to an embodiment, the information for performing the screenshot may include information about whether scrolling is possible with respect to the first view and the second view, or information about a position of a lower end line of the initial screen as the first view and the second view are moved by the scroll cycle. The method may obtain the images corresponding to the first view and the second view based on the information about the position of the lower end line.

According to an embodiment, the initial screen may include at least one third view that is scrollable in a direction different from the first view and the second view.

According to an embodiment, the method may obtain a first initial screen including the first view and the second view and a second initial screen including the third view, and obtain a first screenshot and a second screenshot based on respective scroll cycles with respect to the first initial screen and the second initial screen. The method may merge the first screenshot and the second screenshot.

According to an embodiment, the method may determine a view that is a target of a screenshot, a maximum value or a minimum value of the scroll cycle, or a size of the initial screen, in each scroll cycle.

According to an embodiment, the method may receive an input signal to perform of the screenshot, and identify whether the screenshot operation is possible with respect to the first view and the second view, based on the input signal. The method may obtain the initial screen based on a result of the identifying.

According to an embodiment of the present disclosure, an electronic device for providing a screenshot may be provided. The electronic device providing a screenshot may include a communication unit, a memory storing one or more instructions, and at least one processor configured to execute the one or more instructions. The at least one processor may obtain an initial screen including a plurality of views that are scrollable, the plurality of views including a first view and a second view, and obtain information including a scroll distance of the first view and a scroll distance of the second view for performing a screenshot with respect to the first view and the second view. The scroll distance of the first view may be a minimum value between a scroll distance of a part of the first view, which is included in the initial screen, and a scroll distance of a part of the first view, excluded from the initial screen, and the scroll distance of the second view is a minimum value between a scroll distance of a part of the second view, which is included in the initial screen, and a scroll distance of a part of the second view, excluded from the initial screen. The at least one processor may determine a minimum value between the scroll distance of the first view and the scroll distance of the second view as a scroll cycle, and obtain a current screen that is moved by the scroll distance with respect to the first view and the second view, based on an input scroll signal. The at least one processor may obtain images corresponding to the first view and the second view included in the current screen, and obtain a screenshot by synthesizing the images of the first view and the second view included in the obtained current screen with the initial screen.

According to an embodiment of the present disclosure, provided is a non-transitory computer-readable recording medium having recorded thereon a program, which when executed by a computer, performs the above method disclosed in the present disclosure.

The machine-readable storage medium may be provided in the form of a non-transitory storage medium. Here, the term 'non-transitory' simply means that the storage medium is a tangible device, and does not include a signal (e.g., an electromagnetic wave), but this term does not differentiate between where data is semi-permanently stored in the storage medium and where the data is temporarily stored in the storage medium. For example, the 'non-transitory storage medium' may include a buffer in which data is temporarily stored.

According to an embodiment of the disclosure, the method according to various embodiments disclosed in the present document may be provided to be included in a computer program product. The computer program product may be traded between a seller and a buyer as a product. The computer program product may be distributed in the form of a machine-readable storage medium e.g., compact disc read only memory (CD-ROM)), or be distributed (e.g., downloaded or uploaded) online via an application store (e.g., PlayStore^{™}), or between two user devices (e.g., smart phones) directly. When distributed online, at least part of the computer program product (e.g., downloadable app) may be temporarily generated or at least temporarily stored in the machine-readable storage medium, such as memory of the manufacturer's server, a server of the application store, or a relay server.

## Claims

1. A method of providing, by an electronic device, a screenshot, the method comprising:
obtaining an initial screen including a plurality of views that are scrollable, wherein the plurality of views includes a first view and a second view;
obtaining information for performing a screenshot with respect to the first view and the second view including a scroll distance of the first view and a scroll distance of the second view, wherein the scroll distance of the first view is a minimum value between a scroll distance of a part of the first view, which is included in the initial screen, and a scroll distance of a part of the first view, excluded from the initial screen, and the scroll distance of the second view is a minimum value between a scroll distance of a part of the second view, which is included in the initial screen, and a scroll distance of a part of the second view, excluded from the initial screen;
determining a minimum value between the scroll distance of the first view and the scroll distance of the second view as a scroll cycle;
obtaining a current screen that is moved by the scroll distance with respect to the first view and the second view, based on an input scroll signal;
obtaining images corresponding to the first view and the second view included in the current screen; and
obtaining a screenshot by synthesizing the images of the first view and the second view included in the obtained current screen with the initial screen.

2. The method of claim 1, wherein the initial screen includes at least one third view that is scrollable.

3. The method of claim 1 or claim 2, further comprising:
updating the initial screen to the obtained current screen when the current screen is obtained; and
updating the information for performing the screenshot based on the updated initial screen,
wherein the scroll cycle is determined based on the updated information for performing the screenshot.

4. The method of claim 3, further comprising:
identifying a scrollable view between the first view and the second view, based on the information for performing the screenshot;
updating a screen that is moved from the scrollable view by the determined scroll cycle as the current screen; and
merging an image that is not included in the initial screen, in the scrollable view included in the updated current screen, with the screenshot.

5. The method of any one of claims 1 to 4, wherein the information for
performing the screenshot includes
information about whether scrolling is possible with respect to the first view and the second view, or information about a position of a lower end line of the initial screen when the first view and the second view are moved by the scroll cycle, and
the obtaining of the images corresponding to the first view and the second view comprises
obtaining the images corresponding to the first view and the second view based on the information about the position of the lower end line.

6. The method of any one of claims 1 to 5, wherein the initial screen includes the at least one third view that is scrollable in a direction different from the first view and the second view.

7. The method of claim 6, further comprising:
obtaining a first initial screen including the first view and the second view and a second initial screen including the at least one third view;
obtaining a first screenshot and a second screenshot based on respective scroll cycles with respect to the first initial screen and the second initial screen; and
merging the first screenshot and the second screenshot.

8. The method of any one of claims 1 to 7, further comprising
determining a view that is a target of a screenshot, a maximum value or a minimum value of the scroll cycle, or a size of the initial screen, in each scroll cycle.

9. The method of any one of claims 1 to 8, wherein the obtaining of the initial screen comprises:
receiving an input signal to perform the screenshot;
identifying whether the screenshot operation is possible with respect to the first view and the second view, based on the input signal; and
obtaining the initial screen based on a result of the identifying.

10. An electronic device providing a screenshot, the electronic device comprising:
a communication unit (310);
a memory (330) storing one or more instructions; and
at least one processor (320) configured to execute the one or more instructions, wherein the at least one processor (320) is configured to:
obtain an initial screen including a plurality of views that are scrollable, the plurality of views including a first view and a second view;
obtain information for performing a screenshot with respect to the first view and the second view including a scroll distance of the first view and a scroll distance of the second view, wherein the scroll distance of the first view is a minimum value between a scroll distance of a part of the first view, which is included in the initial screen, and a scroll distance of a part of the first view, excluded from the initial screen, and the scroll distance of the second view is a minimum value between a scroll distance of a part of the second view, which is included in the initial screen, and a scroll distance of a part of the second view, excluded from the initial screen;
determine a minimum value between the scroll distance of the first view and the scroll distance of the second view as a scroll cycle;
obtain a current screen that is moved by the scroll distance with respect to the first view and the second view, based on an input scroll signal;
obtain images corresponding to the first view and the second view included in the current screen; and
obtain a screenshot by synthesizing the images of the first view and the second view included in the obtained current screen with the initial screen.

11. The electronic device of claim 10, wherein the initial screen includes at least one third view that is scrollable.

12. The electronic device of claim 10 or claim 11, wherein the at least one processor (320) is further configured to:
update the initial screen to the obtained current screen when the current screen is obtained; and
update the information for performing the screenshot based on the updated initial screen,
wherein the scroll cycle is determined based on the updated information for performing the screenshot.

13. The electronic device of claim 12, wherein the at least one processor (320) is further configured to:
identify a scrollable view between the first view and the second view, based on the information for performing the screenshot;
update a screen that is moved from the scrollable view by the determined scroll cycle as the current screen; and
merge an image that is not included in the initial screen, in the scrollable view included in the updated current screen, with the screenshot.

14. The electronic device of any one of claims 10 to 13, wherein the information for performing the screenshot includes
information about whether scrolling is possible with respect to the first view and the second view, or information about a position of a lower end line of the initial screen when the first view and the second view are moved by the scroll cycle, and
the at least one processor (320) is further configured to:
obtain the images corresponding to the first view and the second view based on the information about the position of the lower end line.

15. The electronic device of any one of claims 10 to 14, wherein the initial screen includes the at least one third view that is scrollable in a direction different from the first view and the second view.

16. The electronic device of claim 15, wherein the at least one processor (320) is further configured to:
obtain a first initial screen including the first view and the second view and a second initial screen including the at least one third view;
obtain a first screenshot and a second screenshot based on respective scroll cycles with respect to the first initial screen and the second initial screen; and
merge the first screenshot and the second screenshot.

17. The electronic device of claim 10, wherein the at least one processor (320) is further configured to
determine a view that is a target of a screenshot, a maximum value or a minimum value of the scroll cycle, or a size of the initial screen, in each scroll cycle.

18. The electronic device of any one of claims 10 to 17, wherein the at least one processor (320) is further configured to:
receive an input signal to perform the screenshot;
identify whether the screenshot operation is possible with respect to the first view and the second view, based on the input signal; and
obtain the initial screen based on a result of the identifying.

19. A non-transitory computer-readable recording medium having recorded thereon a program, which when executed by a computer, performs the method of any one of claims 1 to 9.
